# EUROPÄISCHE PATENTSCHRIFT

(11) **EP 2 045 678 B1**
(45) Veröffentlichungstag und Bekanntmachung des Hinweises auf die Patenterteilung: **24.11.2010**
(21) Anmeldenummer: 07019277.8
(22) Anmeldetag: 01.10.2007
(51) Int. Cl.: G05B 19/418

(54) **Transparenter handover für mobile Komponenten eines Automatisierungssystems**
Transparent handover for mobile components in an automation system
Handover transparent pour composants mobiles d'un système d'automatisation

(43) Veröffentlichungstag der Anmeldung: 08.04.2009
(73) Patentinhaber: SIEMENS AKTIENGESELLSCHAFT, 80333 München (DE)
(72) Erfinder: Biehler, Georg, 90453 Nürnberg (DE)

(56) Entgegenhaltungen:
- EP-A- 1 501 062
- US-A1- 2006 148 481

## Beschreibung

Die Erfindung betrifft ein Verfahren zur Übermittlung von Daten zwischen einer mobilen Komponente und einer Steuerung eines Automatisierungssystems mit zumindest einem Link zur Anbindung der Komponente an die Steuerung, wobei
- jeder Link mit einer Kommunikationsverbindung zur Steuerung und einer Funkschnittstelle zum Herstellen einer drahtlosen Verbindung zur Komponente versehen wird,
- jedem Link jeweils ein erster Speicherbereich in einem Speicher der Steuerung zugeordnet wird,
- bei Eintritt und bei Austritt der Komponente in eine Funkreichweite jedes Links jeweils eine entsprechende Diagnosemeldung erzeugt wird, welche mittels eines Netzwerkprotokolls an die Steuerung übermittelt wird,
- anhand der Diagnosemeldungen durch die Steuerung jeweils ein aktiver Link bestimmt wird, in dessen Funkreichweite sich die Komponente befindet,
- Daten zwischen der Komponente und der Steuerung durch den jeweils aktiven Link übermittelt werden, wobei
   o von der Steuerung an die Komponente zu übermittelnde Daten aus dem zugeordneten ersten Speicherbereich gelesen und mittels der Funkschnittstelle an die Komponente gesendet werden und/oder
   o von der Komponente an die Steuerung zu übermittelnde Daten mittels der Funkschnittstelle empfangen und in den zugeordneten ersten Speicherbereich geschrieben werden.

Die Erfindung betrifft weiter ein Automatisierungssystem gemäß dem Oberbegriff des Anspruchs 6 sowie ein Engineering-System zur Projektierung eines derartigen Automatisierungssystems.

Ein derartiges Verfahren kommt auf dem Gebiet der Automatisierungstechnik zum Einsatz, wo neben kabelgebundenen Komponenten auch solche mit einer drahtlosen Kommunikationsverbindung zur Steuerung des Automatisierungssystems verwendet werden. Komponenten wie z.B. Sensoren und Aktoren werden an eine Steuerung (im folgenden als SPS bezeichnet) über zentrale oder dezentrale IO-Baugruppen angebunden. Für kabelgebundene Sensoren (z.B. IO-Link...) ist diese Anbindung als zentrale Peripherie (z.B. digitale Baugruppen im Rack der SPS oder in die SPS integrierte Baugruppen, d.h. zentrale Peripherie-Submodule) bzw. als dezentrale Peripherie (z.B. externe digitale Baugruppen) ausgeprägt. Die Anbindung als zentrale Peripherie erfolgt zur SPS hin typischerweise über herstellerspezifische Mechanismen wie beispielsweise einem herstellerspezifischen Rückwandbus mit proprietärem Protokoll. Die Anbindung als dezentrale Peripherie erfolgt typischerweise über einen nach IEC61158 genormten Feldbus wie PROFINET IO, PROFIBUS DP, Interbus, CAN und deren Derivate, Ethernet/IP, Ethercat...

Für drahtlose (wireless) Komponenten (wie wireless HART oder andere) wird diese oben beschriebene Anbindung entsprechend weitergeführt. Drahtlose Sensoren/Aktoren werden ebenfalls über als zentral oder dezentral ausgeprägte Links an die SPS angebunden. Ein solcher Link ist zur SPS als Peripherie ausgeprägt, den wireless Sensoren/Aktoren dient er als wireless Access-Point.

Wireless Sensoren/Aktoren sind jedoch - im Gegensatz zu kabelgebundenen Komponenten - deutlich "bewegbarer", d.h. diese können potentiell auch durch die Anlage wandern. Dieses Wandern durch die Anlage führt zum Durchstreichen mehrerer Funkzellen, da eine von einem Link aufgespannte Funkzelle eine maximale geographische Ausdehnung besitzt. Jede Funkzelle wird durch einen Access-Point abgedeckt. Das Weiterreichen an den nächsten Access-Point wird über HandOver unterstützt.

HandOver ist heutigen wireless Applikationen (zum Beispiel mit dem Handy telefonieren) gegenüber transparent. Fährt einer der beiden Gesprächspartner aus seiner derzeit verwendeten Funkzelle, wird das Handy automatisch an die nächste Zelle übergeben (= HandOver); der Sprechende oder Hörende merkt davon nichts.

In der EP 1 501 062 A1 ist ein Verfahren und ein HMI-System zur Bedienung und Beobachtung einer technischen Anlage offenbart. Das Verfahren beruht auf dem Prinzip, dass keine feste, sondern nur eine temporäre Zuordnung einer mobilen Komponente zu einer technischen Anlage erfolgt. Es müssen somit selektiv nur diejenigen HMI-Daten in die mobile Komponente geladen werden, die zur Durchführung der jeweils gewünschten Aufgaben an der zugeordneten technischen Anlage erforderlich sind.

In der US 2006/0148481 A1 wird ein Verfahren und eine Vorrichtung zur Erleichterung der drahtlosen Kommunikation zwischen unterschiedlichen Komponenten eines verteilten Systems vorgestellt. Die Kommunikation zu den verteilten Komponenten erfolgt dabei über ein mehrkanaliges System.

Nutzen wireless (mobile) Komponenten wie Sensoren/Aktoren HandOver, so wird die Komponente beim Herumwandern automatisch durch das unterlagerte wireless Netzwerkprotokoll von Access-Point zu Access-Point weitergereicht, wenn er die durch einen Access-Point aufgespannte Funkzelle verlässt und die durch einen anderen Access-Point aufgespannte Funkzelle betritt. Hierbei wird davon ausgegangen, dass die Komponente von Access-Point zu Access-Point eindeutig weitergereicht wird, d.h. immer genau einem Access-Point zugeordnet ist. Dies wird durch das unterlagerte wireless Netzwerkprotokoll erbracht.

Da die betrachtete mobile Komponente an verschiedenen Links auftaucht (der Link ist ja zur Komponente hin der Access-Point), der Link nach oben aber als zentrale bzw. dezentrale Peripherie an die SPS angebunden ist, kann dies mit den heutigen Mechanismen der Einbindung nur folgendermaßen gelöst werden:
- Die Komponente muss an allen Links projektiert werden, die das Wandergebiet der Komponente abdecken.
- Jeder der Links reserviert einen expliziten Adressbereich in den Peripheriedaten der Steuerung.
- Der HandOver einer Komponente führt zu Diagnosemeldungen wie
   o Komponenten-Ausfall am alten Link und
   o Komponenten-Wiederkehr am neuen Link.
- Nach Übergabe der Komponente tauchen deren Werte an einer anderen Stelle in den Peripheriedaten auf.

Damit muss eine auf dem Automatisierungssystem laufende Applikation die Diagnosemeldungen auswerten und den Zugriff auf den entsprechenden Adressbereich in den Peripheriedaten steuern, um an die Daten der Komponente zu kommen. Dies führt zu sehr komplexen Applikationen.

Der Erfindung liegt die Aufgabe zugrunde, ein Verfahren und ein Automatisierungssystem anzugeben, mit denen auf Daten einer mobilen Komponente genauso einfach wie auf solche einer kabelgebundenen Komponente zugegriffen werden kann.

Diese Aufgabe wird bei einem Verfahren der eingangs genannten Art dadurch gelöst, dass
- der Komponente ein zweiter Speicherbereich im Speicher zugeordnet wird und
- von der Steuerung an die Komponente zu übermittelnde Daten im zweiten Speicherbereich abgelegt und vom zweiten Speicherbereich in den ersten Speicherbereich jedes Links kopiert werden und/oder
- von der Komponente an die Steuerung zu übermittelnde Daten vom ersten Speicherbereich des jeweils aktiven Links in den zweiten Speicherbereich kopiert werden.

Die Aufgabe wird weiter gelöst durch ein Automatisierungssystem mit den in Anspruch 6 angegebenen Merkmalen.

Durch die Zuordnung eines zweiten Speicherbereiches (mit zugehörigem Adressbereich) zur mobilen Komponente, von dem aus von der Steuerung an die Komponente (z.B. einen Aktor) zu übermittelnde Daten in den ersten Speicherbereich jedes Links kopiert werden und/oder in den von der Komponente (z.B. einem Sensor) an die Steuerung zu übermittelnde Daten vom ersten Speicherbereich des jeweils aktiven Links kopiert werden, kann eine auf dem Automatisierungssystem laufende Applikation Daten mit der mobilen Komponente durch Schreiben in den bzw. Lesen aus dem zweiten Speicherbereich austauschen. Somit stehen die jeweils aktuellen Daten für die bzw. von der mobilen Komponente im zweiten Speicherbereich zur Verfügung, auf den von der Applikation unter (nur) einer Adresse zugegriffen werden kann.

Dabei werden Daten von einem Automatisierungsbetriebssystem (das heißt der Steuerung), die an eine mobile Komponente wie beispielsweise einen Aktor zu übertragen sind, in den ersten Speicherbereich jedes Links kopiert, so dass auch bei einem Weiterwandern der Komponente aus der Funkzelle eines Links in die Funkzelle eines anderen Links - d.h. bei einem HandOver von einem Access-Point zu einem anderen Access-Point - auch der neue Link über die jeweils aktuellen Daten für die Komponente verfügt. Umgekehrt werden Daten von einer mobilen Komponente wie beispielsweise einem Sensor, die an die SPS (bzw. eine auf dieser laufenden Applikation) übermittelt werden sollen, nur aus dem ersten Speicherbereich des jeweils aktiven Links in den zweiten Speicherbereich kopiert, da nur der jeweils aktive Link - aus Sicht des Sensors der Access-Point, in dessen Funkzelle sich der Sensor gerade befindet - über die aktuellen Sensordaten verfügt.

Das Kopieren der Daten zwischen erstem/n Speicherbereich/en und zweitem Speicherbereich ist für die Applikation "unsichtbar"; diese greift immer über den zweiten Speicherbereich, d.h. über dieselbe Adresse, auf Daten der mobilen Komponente zu. Somit unterscheidet sich durch die erfindungsgemäße Lösung aus Sicht der Applikation eine mobile Komponente nicht von einer kabelgebundenen Komponente, da der HandOver der Komponente von einem Access-Point zum nächsten Access-Point für die Applikation transparent ist. Hieraus resultiert eine deutlich vereinfachte Nutzung von solchen Komponenten (wie Sensoren/Aktoren) im Vergleich zu der heute möglichen Lösung.

In einer vorteilhaften Form der Ausgestaltung wird der Komponente eine Parametrierung zugeordnet. Somit steht die mobile Komponente mit ihren Parametern einer Applikation unter genau einer Adresse mit genau einer Parametrierung zur Verfügung. Diese Parametrierung wird durch ein Engineeringsystem oder das Automatisierungsbetriebssystem auf die jeweiligen Links vervielfacht.

In einer weiteren vorteilhaften Ausführungsform weist das Automatisierungssystem eine Menge von Links auf, von der eine Teilmenge zur Anbindung der Komponente an die Steuerung konfiguriert wird. Dabei muss die Teilmenge keine echte Teilmenge der Menge von Links sein. Hierdurch konfiguriert ein Anwender, an welchen Links die Komponente erscheinen darf, d.h. in welchen Funkzellen (entlang des Wanderbereichs der Komponente) sie erkannt werden soll. Aus dieser Zuordnung werden die Informationen für die Komponentendaten in den ersten Speicherbereichen abgeleitet, das heißt zum Beispiel in welche ersten Speicherbereiche an einen Aktor zu übermittelnde Daten zu kopieren sind. Diese Informationen sind für die Applikation jedoch verborgen; sie dienen nur für das interne Handling in Runtime.

In einer weiteren vorteilhaften Ausführungsform wird mittels der Steuerung ein Alarmsignal erzeugt, wenn anhand der Diagnosemeldungen nicht innerhalb einer einstellbaren Alarmzeit ein aktiver Link bestimmt werden kann. Das heißt solange nach einem Komponenten-Ausfall eine entsprechende Komponenten-Wiederkehr in "zeitnahem" Abstand erfolgt (bzw. bei sich überlappenden Funkzellen erfolgt ist), ist der HandOver transparent für die auf der Steuerung laufende Applikation, andernfalls erfolgt eine Alarmierung der Applikation. Als zeitnaher Abstand kann z.B. die dreifache Aktualisierungszeit (der Komponentendaten) als Alarmzeit eingestellt werden.

In einer weiteren vorteilhaften Ausführungsform wird die Zuordnung des zweiten Speicherbereichs und/oder der Parametrierung zur Komponente und/oder die Konfigurierung der Links zur Anbindung der Komponente an die Steuerung und/oder die Einstellung der Alarmzeit mittels eines Engineering-Systems vorgenommen. Hierdurch kann ein Anwender auf einfache Weise mittels eines dafür vorgesehenen (erfindungsgemäßen) Engineering-Systems die komplette Projektierung des Automatisierungssystems inklusive aller für die erfindungsgemäße Lösung benötigten Parameter vorzunehmen.

Im Folgenden wird die Erfindung anhand des in der Figur dargestellten Ausführungsbeispiels näher beschrieben und erläutert. Es zeigt:

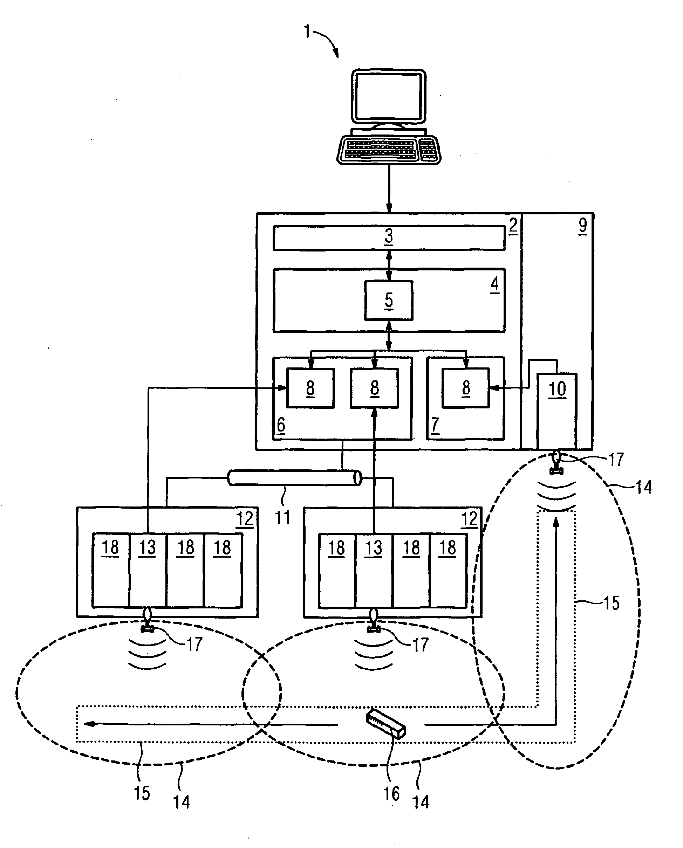

- FIG 1: eine schematische Darstellung eines erfindungsgemäßen Automatisierungssystems.

Die Figur zeigt ein Automatisierungssystem 2-18 mit einer speicherprogrammierbaren Steuerung (SPS) 2, auf der eine (Anwender-) Applikation 3 läuft. Im Rack der SPS 2 befindet sich eine digitale Baugruppe als zentrale Peripherie 9, die über einen herstellerspezifischen oder standardisierten Rückwandbus an die SPS 2 angebunden ist und mit einem Link 10 zur drahtlosen Anbindung einer mobilen Komponente 16 versehen ist. Zudem weist das Automatisierungssystem 2-18 noch IO-Geräte als dezentrale Peripherie 12 auf, wobei die IO-Geräte 12 je einen Link 13 ebenfalls zur drahtlosen Anbindung einer mobilen Komponente 16 an die Steuerung 2 sowie weitere Baugruppen 18 aufweisen. Die dezentrale Peripherie 12 ist an die SPS 2 beispielsweise über einen Feldbus 11 mit beliebigem Feldbusprotokoll wie z.B. IEC61158 angebunden, das erfindungsgemäße Verfahren ist allerdings von der tatsächlichen Kommunikationsanbindung unabhängig. Ebenso ist es von der Kommunikationsanbindung der mobilen Komponente 16 an den jeweiligen Link 10, 13 unabhängig, d.h. die mobile Komponente 16 kann über ein beliebiges "Wireless Communication Protocol" an die Links 10, 13 angebunden werden - beispielsweise basierend auf 802.11 (WLAN), auf 802.15.4 (z.B. WSAN, wireless HART, ...), auf 802.15.1 (Bluetooth) oder auf anderen wireless Varianten.

Ein Link 10, 13 spannt über seinen Access-Point 17 eine Funkzelle 14 auf. Im Engineering (durch Planung z.B. mittels eines Engineering-Systems 1) bzw. in der realen Anlage (durch Erfahrung und durch Ausprobieren) werden die Links 10, 13 so platziert, dass die Funkzellen 14 den vorgesehenen Wanderbereich 15 der mobilen Komponente 16, z.B. eines wireless Sensors oder Aktors, überdecken.

Im Engineering-System 1 projektiert der Anwender die mobile Komponente 16 mit seinen Parametern und seiner für die Anwenderapplikation 3 relevanten Adresse, die einen der Komponente 16 zugeordneten Speicherbereich 5 bezeichnet, in einem Prozessabbild 4. Die Komponente (Sensor/Aktor) 16 hat dabei zur Applikation hin genau eine Adresse und eine Parametrierung. Hierzu ist das Engineering (-System 1) entsprechend vorzubereiten. Zusätzlich konfiguriert der Anwender, an welchen Links 10, 13 die Komponente 16 erscheinen darf, d.h. in welchen Funkzellen 14 der Sensor/Aktor 16 erkannt werden soll. Aus dieser Konfigurierung werden die Informationen für die Sensor-/Aktor-Daten 8 in den dezentralen 6 bzw. zentralen Peripheriedaten 7 abgeleitet, in denen jedem Link 10, 13 ein erster Speicherbereich für die Sensor-/Aktor-Daten 8 zugeordnet ist. Diese Informationen sind für die Anwenderapplikation 3 jedoch verborgen; sie dienen nur für das interne Handling in Runtime.

Bezüglich der Abbildung der Komponenten-Daten 8 in den Peripheriedaten 6, 7 in die der Anwenderapplikation 3 zur Verfügung stehenden Komponenten-Daten 5 im Prozessabbild 4 gelten folgende Regeln:
- Für einen wireless Sensor 16 - aus Sicht der Anwenderapplikation sind das Eingänge - gelten die Sensor-Daten 8, welche aus dem Link 10, 13 stammen, in dessen Funkzelle 14 der Sensor 16 sich gerade befindet. Daher werden diese Sensor-Daten 8 in die Sensor-Daten 5 des Prozessabbilds 4 kopiert. Diagnosemeldungen über Sensor-Ausfälle oder Sensor-Wiederkehr werden intern genutzt, um die derzeitige Quelle 8 für die Sensor-Daten 5 auszuwählen; sie schlagen nicht auf die Anwenderapplikation 3 durch, solange der Sensor 16 durch HandOver in eine neue Funkzelle 14 übergeben wird, welche ebenfalls durch den Anwender zugeordnet wurde, d.h. zur Anbindung der Komponente 16 konfiguriert wurde. Solange nach einem Sensorausfall eine entsprechende Sensor-Wiederkehr in "zeitnahem" Abstand erfolgt (z.B. maximal die dreifache Aktualisierungszeit), ist der HandOver transparent für die Anwenderapplikation 3. Andernfalls erfolgt eine Alarmierung der Applikation 3.
- Für einen wireless Aktor 16 - aus Sicht der Anwenderapplikation 3 sind das Ausgänge - werden die Aktor-Daten 5 auf alle Aktor-Daten 8 in den dezentralen 6 und zentralen Peripheriedaten 7 dupliziert. Somit hat jeder Link 10, 13 immer die aktuellen Ausgangsdaten. Aktor-Ausfälle oder Aktor-Wiederkehr werden intern "ignoriert", da jeder Link 10, 13 immer die aktuellen Ausgangsdaten 5, 8 bekommt; sie schlagen ebenfalls nicht auf die Anwenderapplikation 3 durch, solange der Aktor 16 durch HandOver in eine neue Funkzelle 14 übergeben wird, welche ebenfalls durch den Anwender zugeordnet wurde. D.h. solange nach einem Aktor-Ausfall eine entsprechende Aktor-Wiederkehr in "zeitnahem" Abstand (z.B. maximal die dreifache Aktualisierungszeit) erfolgt, ist der HandOver transparent für die Anwenderapplikation 3. Andernfalls erfolgt eine Alarmierung der Applikation 3.

Mit der erfindungsgemäßen Lösung unterscheidet sich aus Sicht der Applikation 3 eine mobile ("streunende") Komponente 16 nicht von einer fest installierten ("an die Kette gelegten") Komponente. Hieraus resultiert eine deutlich vereinfachte Nutzung von solchen mobilen Komponenten 16, wie beispielsweise Sensoren oder Aktoren, im Vergleich zu der heute möglichen Lösung.

Zusammenfassend betrifft die Erfindung ein Automatisierungssystem, ein Engineering-System sowie ein Verfahren zur Übermittlung von Daten zwischen einer mobilen Komponente und einer Steuerung eines Automatisierungssystems mit zumindest einem Link zur Anbindung der Komponente an die Steuerung. Um auf Daten der mobilen Komponente genauso einfach wie auf solche einer kabelgebundenen Komponente zugreifen zu können, wird vorgeschlagen, dass der Komponente ein Speicherbereich im Speicher der Steuerung des Automatisierungssystems zugeordnet wird, in den zum einen an die Komponente zu übermittelnde Daten abgelegt und in allen Links zugeordnete Speicherbereiche kopiert werden, sodass alle Links, die zur Kommunikation mit der Komponente vorgesehen sind, über die aktuellen Daten verfügen, und in den zum anderen aktuelle Daten von der Komponente aus dem Speicherbereich des Links kopiert werden, in dessen Funkzelle sich die Komponente gerade befindet. Für eine auf der Steuerung des Automatisierungssystems laufende Anwenderapplikation ist dabei ein HandOver der Komponente zwischen verschiedenen Funkzellen transparent, da die Applikation lediglich auf die immer aktuellen Komponenten-Daten im der Komponente zugeordneten Speicherbereich zugreift.

## Patentansprüche

1. Verfahren zur Übermittlung von Daten zwischen einer mobilen Komponente (16) und einer Steuerung (2) eines Automatisierungssystems (2-18) mit zumindest einem Link (10, 13) zur Anbindung der Komponente (16) an die Steuerung (2), wobei
- jeder Link (10, 13) mit einer Kommunikationsverbindung (11) zur Steuerung (2) und einer Funkschnittstelle (17) zum Herstellen einer drahtlosen Verbindung zur Komponente (16) versehen wird,
- jedem Link (10, 13) jeweils ein erster Speicherbereich (8) in einem Speicher (4, 6, 7) der Steuerung (2) zugeordnet wird,
- bei Eintritt und bei Austritt der Komponente (16) in eine Funkreichweite (14) jedes Links (10, 13) jeweils eine entsprechende Diagnosemeldung erzeugt wird, welche mittels eines Netzwerkprotokolls an die Steuerung (2) übermittelt wird,
- anhand der Diagnosemeldungen durch die Steuerung (2) jeweils ein aktiver Link (10, 13) bestimmt wird, in dessen Funkreichweite (14) sich die Komponente (16) befindet,
- Daten zwischen der Komponente (16) und der Steuerung (2) durch den jeweils aktiven Link (10, 13) übermittelt werden, wobei
o von der Steuerung (2) an die Komponente (16) zu übermittelnde Daten aus dem zugeordneten ersten Speicherbereich (8) gelesen und mittels der Funkschnittstelle (17) an die Komponente (16) gesendet werden und/oder
○ von der Komponente (16) an die Steuerung (2) zu übermittelnde Daten mittels der Funkschnittstelle (17) empfangen und in den zugeordneten ersten Speicherbereich (8) geschrieben werden,
**dadurch gekennzeichnet, dass**
- der Komponente (16) ein zweiter Speicherbereich (5) im Speicher (4, 6, 7) zugeordnet wird und
- von der Steuerung (2) an die Komponente (16) zu übermittelnde Daten im zweiten Speicherbereich (5) abgelegt und vom zweiten Speicherbereich (5) in den ersten Speicherbereich (8) jedes Links (10, 13) kopiert werden und/oder
- von der Komponente (16) an die Steuerung (2) zu übermittelnde Daten vom ersten Speicherbereich (8) des jeweils aktiven Links (10, 13) in den zweiten Speicherbereich (5) kopiert werden.

2. Verfahren nach Anspruch 1,
wobei der Komponente (16) eine Parametrierung zugeordnet wird.

3. Verfahren nach Anspruch 1 oder 2,
wobei das Automatisierungssystem (2-18) eine Menge von Links (10, 13) aufweist, von der eine Teilmenge zur Anbindung der Komponente (16) an die Steuerung (2) konfiguriert wird.

4. Verfahren nach einem der vorhergehenden Ansprüche,
wobei mittels der Steuerung (2) ein Alarmsignal erzeugt wird, wenn anhand der Diagnosemeldungen nicht innerhalb einer einstellbaren Alarmzeit ein aktiver Link (10, 13) bestimmt werden kann.

5. Verfahren nach einem der vorhergehenden Ansprüche,
wobei die Zuordnung des zweiten Speicherbereichs (5) und/oder der Parametrierung zur Komponente (16) und/oder die Konfigurierung der Links (10, 13) zur Anbindung der Komponente (16) an die Steuerung (2) und/oder die Einstellung der Alarmzeit mittels eines Engineering-Systems (1) vorgenommen wird.

6. Automatisierungssystem (2-18) mit einer mobilen Komponente (16), mit einer Steuerung (2) und mit zumindest einem Link (10, 13) zur Anbindung der Komponente (16) an die Steuerung (2), wobei
- jeder Link (10, 13) eine Kommunikationsverbindung (11) zur Steuerung (2) und eine Funkschnittstelle (17) zum Herstellen einer drahtlosen Verbindung zur Komponente (16) aufweist,
- ein Speicher (4, 6, 7) der Steuerung (2) für jeden Link (10, 13) jeweils einen ersten Speicherbereich (8) aufweist,
- bei Eintritt und bei Austritt der Komponente (16) in eine Funkreichweite (14) jedes Links (10, 13) jeweils eine entsprechende Diagnosemeldung erzeugbar ist, welche mittels eines Netzwerkprotokolls an die Steuerung (2) übermittelbar ist,
- anhand der Diagnosemeldungen durch die Steuerung (2) jeweils ein aktiver Link (10, 13) bestimmbar ist, in dessen Funkreichweite (14) sich die Komponente (16) befindet,
- Daten zwischen der Komponente (16) und der Steuerung (2) durch den jeweils aktiven Link (10, 13) übermittelbar sind, wobei
o von der Steuerung (2) an die Komponente (16) zu übermittelnde Daten aus dem zugeordneten ersten Speicherbereich (8) lesbar und mittels der Funkschnittstelle (17) an die Komponente (16) sendbar sind und/oder
o von der Komponente (16) an die Steuerung (2) zu übermittelnde Daten mittels der Funkschnittstelle (17) empfangbar und in den zugeordneten ersten Speicherbereich (8) schreibbar sind,
**dadurch gekennzeichnet, dass**
- der Speicher (4, 6, 7) einen der Komponente (16) zugeordneten zweiten Speicherbereich (5) aufweist und
- von der Steuerung (2) an die Komponente (16) zu übermittelnde Daten im zweiten Speicherbereich (5) ablegbar und vom zweiten Speicherbereich (5) in den ersten Speicherbereich (8) jedes Links (10, 13) kopierbar sind und/oder
- von der Komponente (16) an die Steuerung (2) zu übermittelnde Daten vom ersten Speicherbereich (8) des jeweils aktiven Links (10, 13) in den zweiten Speicherbereich (5) kopierbar sind.

7. Automatisierungssystem nach Anspruch 6,
wobei der Komponente (16) eine Parametrierung zuordenbar ist.

8. Automatisierungssystem nach Anspruch 6 oder 7
mit einer Menge von Links (10, 13), von der eine Teilmenge zur Anbindung der Komponente (16) an die Steuerung (2) konfigurierbar ist.

9. Automatisierungssystem nach einem der Ansprüche 6 bis 8,
wobei mittels der Steuerung (2) ein Alarmsignal erzeugbar ist, wenn anhand der Diagnosemeldungen nicht innerhalb einer einstellbaren Alarmzeit ein aktiver Link (10, 13) bestimmbar ist.

10. Automatisierungssystem nach einem der Ansprüche 6 bis 9,
wobei die Zuordnung des zweiten Speicherbereichs (5) und/oder der Parametrierung zur Komponente (16) und/oder die Konfigurierung der Links (10, 13) zur Anbindung der Komponente (16) an die Steuerung (2) und/oder die Einstellung der Alarmzeit mittels eines Engineering-Systems (1) vornehmbar ist.

## Claims

1. Method for transferring data between a mobile component (16) and a controller (2) of an automation system (2-18) with at least one link (10, 13) for linking the component (16) to the controller, with
- each link (10, 13) being provided with a communication connection (11) to the controller (2) and a radio interface (17) for establishing a wireless connection to the component (16),
- each link (10, 13) being assigned a respective first memory area (8) in a memory (4, 6, 7) of the controller (2),
- when the component (16) enters and leaves a radio coverage area (14) of each link (10, 13) a corresponding diagnostic message being created, which is transferred by means of a network protocol to the controller (2),
- an active link (10, 13), in the radio coverage area (14) of which the component (16) is located, being determined in each case by the controller (2) on the basis of the diagnostic messages,
- data being transferred between the component (16) and the controller (2) by the respective active link (10, 13), with
o data to be transferred from the controller (2) to the component (16) being read out of the assigned first memory area (8) and sent by means of the radio interface (17) to the component (16) and/or
o data to be transferred from the component (16) to the controller (2) being received by means of the radio interface (17) and written into the assigned first memory area (8),
**characterized in that,**
- the component (16) is assigned a second memory area (5) in the memory (4, 6, 7) and
- data to be transferred from the controller (2) to the component (16) is stored in the second memory area (5) and copied from the second memory area (5) into the first memory area (8) of each link (10, 13) and/or
- data to be transferred from the component (16) to the controller (2) is copied from the first memory area (8) of the respective active link (10, 13) into the second memory area (5).

2. Method according to claim 1,
with the component (16) being assigned a parameterization.

3. Method according to claim 1 or 2,
with the automation system (2-18) featuring a set of links (10, 13) of which a subset is configured for linking the component (16) to the controller (2).

4. Method according to one of the previous claims,
with an alarm signal being generated by the controller (2) if, on the basis of the diagnostic messages, an active link (10, 13) cannot be determined within a configurable alarm time.

5. Method according to one of the previous claims,
with the assignment of the second memory area (5) and/or the parameterization to the component (16) and/or the configuration of the links (10, 13) for linkage of the component (16) to the controller (2) and/or the setting of the alarm time being undertaken by means of an engineering system (1).

6. Automation system (2-18) with a mobile component (16), with a controller (2) and with at least one link (10, 13) for connecting the component (16) to the controller, with
- each link (10, 13) having a communication connection (11) to the controller (2) and a radio interface (17) for establishing a wireless connection to the component (16),
- a memory (4, 6, 7) of the controller (2) featuring a first memory area (8) in each case for each link (10, 13),
- when the component (16) enters and leaves the radio coverage area (14) of each link (10, 13) a corresponding diagnostic message being generated which is able to be transferred to the controller (2) by means of a network protocol,
- an active link (10, 13) in the radio coverage area (14) of which the component (16) is located being able to determined by the controller (2) in each case on the basis of the diagnostic messages,
- data being able to be transferred between the component (16) and the controller (2) by the respective active link (10, 13), with
o data to be transferred from the controller (2) to the component (16) being able to be read out of the assigned first memory area (8) and able to be sent by means of the radio interface (17) to the component (16) and/or
o data to be transferred from the component (16) to the controller (2) being able to be received by means of the radio interface (17) and being able to be written into the assigned first memory area,
**characterized in that,**
- the memory (4, 6, 7) features a second memory area (5) assigned to the component (16) and
- data to be transferred from the controller (2) to the component is able to be stored in the second memory area (5) and is able to be copied from the second memory area (5) into the first memory area (8) of each link (10, 13) and/or
- data to be transferred from the component (16) to the controller (2) is able to be copied from the first memory area (8) of the respective active link (10, 13) into the second memory area.

7. Automation system according to claim 6,
with the component (16) being able to be assigned a parameterization.

8. Automation system according to claim 6 or 7
with a set of links (10, 13) from which a subset is able to be configured for linking the component (16) to the controller (2).

9. Automation system according to one of the claims 6 to 8,
with an alarm signal being able to be generated by the controller (2) if, on the basis of the diagnostic messages, an active link (10, 13) cannot be determined within a configurable alarm time.

10. Automation system according to one of the claims 6 to 9,
with the assignment of the second memory area (5) and/or the parameterization to the component (16) and/or the configuration of the links (10, 13) for linkage of the component (16) to the controller (2) and/or the setting of the alarm time being able to be undertaken by means of an engineering system (1).

## Revendications

1. Procédé de transmission de données entre un composant ( 16 ) mobile et un automate ( 2 ) d'un système ( 2 à 18 ) d'automatisation, comprenant au moins un lien ( 10, 13 ) de liaison du composant ( 16 ) à l'automate ( 2 ), dans lequel
- on munit chaque lien ( 10, 13 ) d'une liaison ( 11 ) de communication vers l'automate ( 2 ) et d'une interface ( 17 ) radio pour ménager une liaison sans fil vers le composant ( 16 ),
- on associe à chaque lien ( 10, 13 ) respectivement une première zone ( 8 ) de mémoire dans une mémoire ( 4, 6, 7 ) de l'automate ( 2 ),
- lorsque le composant ( 6 ) entre dans une couverture ( 14 ) radio de chaque lien ( 10, 13 ) et en sort, on produit respectivement un message de diagnostic correspondant, qui est transmis à l'automate ( 2 ) au moyen d'un rapport de réseau,
- on détermine au moyen de messages de diagnostic par l'automate ( 2 ) respectivement un lien ( 10, 13 ) actif dans la couverture ( 14 ) radio duquel se trouve le composant ( 16 ),
- on transmet des données entre le composant ( 16 ) et l'automate ( 2 ) par le lien ( 10, 13 ) actif respectif, dans lequel,
○ on lit dans la première zone ( 8 ) de mémoire associée des données à transmettre de l'automate ( 2 ) au composant ( 16 ) et au moyen de l'interface ( 17 ) radio on les envoie au composant ( 16 ) et/ou
○ on reçoit au moyen de l'interface ( 17 ) radio des données à transmettre du composant ( 16 ) à l'automate ( 2 ) et on les écrit dans la première zone ( 8 ) de mémoire associée,
**caractérisé en ce que**
- on associe au composant ( 16 ) une deuxième zone ( 5 ) de mémoire dans la mémoire ( 4, 6, 7 ) et
- on mémorise dans la deuxième zone ( 5 ) de mémoire de données à transmettre de l'automate ( 2 ) au composant ( 16 ) et on les copie de la deuxième zone ( 5 ) de mémoire dans la première zone libre de mémoire de chaque lien ( 10, 13 ) et/ou
- on copie dans la deuxième zone ( 5 ) de mémoire des données de la première zone ( 8 ) de mémoire du lien ( 10, 13 ) actif respectif à transmettre du composant ( 16 ) à l'automate ( 2 ).

2. Procédé suivant la revendication 1,
dans lequel on associe un paramétrage au composant ( 16 ).

3. Procédé suivant la revendication 1 ou 2,
dans lequel le système ( 2 à 18 ) d'automatisation a beaucoup de liens ( 10, 13 ), dont une partie est configurée pour la liaison du composant ( 16 ) à l'automate ( 2 ) .

4. Procédé suivant l'une des revendications précédentes,
dans lequel on produit au moyen de l'automate ( 2 ) un signal d'alerte si, à l'aide des messages de diagnostic, un lien ( 10, 13 ) actif ne peut pas être déterminé dans une durée d'alerte réglable.

5. Procédé suivant l'une des revendications précédentes,
dans lequel on effectue l'association de la deuxième zone ( 5 ) de mémoire et/ou de la paramétrisation au composant ( 16 ) et/ou la configuration du lien ( 10, 13 ) pour lier le composant ( 16 ) à l'automate ( 2 ) et/ou le réglage de la durée d'alerte au moyen d'un système ( 1 ) d'ingénierie.

6. Système ( 2 à 18 ) d'automatisation comprenant un composant ( 16 ) mobile, un automate ( 2 ) et au moins un lien ( 10, 13 ) de liaison du composant ( 16 ) à l'automate ( 2 ), dans lequel
- chaque lien ( 10, 13 ) a une liaison ( 11 ) de communication vers l'automate ( 2 ) et une interface ( 17 ) radio pour ménager une liaison sans fil vers le composant ( 16 ),
- une mémoire ( 4, 6, 7 ) de l'automate ( 2 ) a pour chaque lien ( 10, 13 ) respectivement une première zone ( 8 ) de mémoire,
- lorsque le composant ( 16 ) entre dans une couverture ( 14 ) radio de chaque lien ( 10, 13 ) et en sort, respectivement un message de diagnostic correspond peut être produit, message qui peut être transmis à l'automate ( 2 ) au moyen d'un rapport de réseau,
- au moyen des messages de diagnostic, il peut être déterminé par l'automate ( 2 ) respectivement en lien ( 10, 13 ) actif, dans la couverture ( 14 ) radio duquel se trouve le composant ( 16 ),
- des données entre le composant ( 16 ) et l'automate ( 2 ) peuvent être transmises par le lien ( 10, 13 ) actif respectif, dans lequel
○ des données à transmettre de l'automate ( 2 ) au composant ( 16 ) peuvent être lues dans la première zone ( 8 ) de mémoire associée et être envoyées au composant ( 16 ) au moyen de l'interface ( 17 ) radio et/ou
○ des données à transmettre du composant ( 16 ) à l'automate ( 2 ) peuvent être reçues au moyen de l'interface ( 17 ) radio et être écrites dans la première zone ( 8 ) de mémoire associée
**caractérisé en ce que**
- la mémoire ( 4, 6, 7 ) a une deuxième zone ( 5 ) de mémoire associée au composant ( 16 ) et
- des données à transmettre de l'automate ( 2 ) au composant ( 16 ), qui peuvent être mémorisées dans la deuxième zone ( 5 ) de mémoire, peuvent être copiées de la deuxième zone ( 5 ) de mémoire à la première zone ( 8 ) de mémoire de chaque lien ( 10, 13 ) et/ou
- des données à transmettre du composant ( 16 ) à l'automate ( 2 ) peuvent être copiées de la première zone ( 8 ) de mémoire du lien ( 10, 13 ) actif respectif dans la deuxième ( 5 ) de mémoire.

7. Système d'automatisation suivant la revendication 6,
dans lequel un paramétrage peut être associé au composant ( 16 ).

8. Système d'automatisation suivant la revendication 6 ou 7, comprenant beaucoup de liens ( 10, 13 ) dont une partie peut être configurée pour la liaison du composant ( 16 ) à l'automate ( 2 ).

9. Système d'automatisation suivant l'une des revendications 6 à 8, dans lequel au moyen de l'automate ( 2 ) un signal d'alerte peut être produit lorsqu'au moyen des messages de diagnostic on ne peut pas déterminer qu'un lien ( 10, 13 ) actif se trouve dans une durée d'alerte réglable.

10. Système d'automatisation suivant l'une des revendications 6 à 9, dans lequel l'association de la deuxième zone ( 5 ) de mémoire et/ou de la paramétrisation au composant ( 16 ) et/ou la configuration du lien ( 10, 13 ) pour la liaison du composant ( 16 ) et à l'automate ( 2 ) et/ou le réglage de la durée d'alerte peuvent être effectués au moyen d'un système ( 1 ) d'ingénierie.
